## Europäisches Patentamt

## European Patent Office

## Office européen des brevets

(11) Veröffentlichungsnummer: **0 316 611**
**B1**

(12) **EUROPÄISCHE PATENTSCHRIFT**

(45) Veröffentlichungstag der Patentschrift:
28.11.90

(51) Int. Cl.⁵: **H04B 1/04**

(21) Anmeldenummer: **88117545.9**

(22) Anmeldetag: **21.10.88**

(54) UKW-Hörfunk-Senderanlage bestehend aus mindestens zwei Sendern unterschiedlicher Frequenz.

(30) Priorität: **19.11.87 DE 3739112**

(43) Veröffentlichungstag der Anmeldung:
**24.05.89 Patentblatt 89/21**

(45) Bekanntmachung des Hinweises auf die Patenterteilung:
**28.11.90 Patentblatt 90/48**

(84) Benannte Vertragsstaaten:
**AT BE CH DE ES FR GB GR IT LI NL SE**

(56) Entgegenhaltungen:
**US-A- 3 696 429**

**PATENT ABSTRACTS OF JAPAN, Band 10,
Nr. 11 (E-374)[2068], 17. Januar 1986; & JP-A-60 173 934
PATENT ABSTRACTS OF JAPAN, Band 8,
Nr. 4 (E-220), 10. Januar 1984; JP-A-58 171 138**

(73) Patentinhaber: **Rohde & Schwarz GmbH & Co. KG,
Mühldorfstrasse 15, D-8000 München 80(DE)**

(72) Erfinder: **Bauer, Helmut, Buchenweg 10,
D-8134 Niederpöcking(DE)**

(74) Vertreter: **Graf, Walter, Dipl.-Ing., Sckellstrasse 1,
D-8000 München 80(DE)**

**Beschreibung**

Die Erfindung betrifft eine UKW-Hörfunk-Senderanlage laut Oberbegriff des Hauptanspruches.

Senderanlagen dieser Art sind bekannt (Hörfunk-Sendesysteme, INFO Nr. 3-012D-2 der Firma Rohde & Schwarz). Die jeweils auf unterschiedlicher Sendefrequenz im UKW-Bereich 87,5 bis 108 MHz arbeitenden Sender, deren Leistungsverstärker mit Röhren oder Transistoren bestückt sind und eine Ausgangsleistung von beispielsweise 10 kW besitzen (Sender Seiten 16 bis 32 aus INFO Nr. 3-012D-2) sind jeweils über Sternpunkt- oder Richtkoppler-Senderweichen voneinander entkoppelt mit der gemeinsamen Senderantenne verbunden (Weichen beispielsweise laut Seite 61 bis 67 nach INFO Nr. 3-012D-2). Die Filter dieser Weichen sind auf die jeweilige Ausgangsfrequenz des zugehörigen Senders abgestimmt. Je nachdem, wie eng die Frequenzen der einzelnen Sender beieinanderliegen, möglicherweise sogar noch auf der Filterflanke der anderen Sender, besteht die Gefahr, daß die Ausgangsleistung des einen Senders von der Antenne rückwärts über das Filter des anderen Senders zum Ausgang dieses anderen Senders gelangt und sich dort mit dem Ausgangssignal dieses anderen Senders überlagert. Dadurch entstehen störende Mischfrequenzen, die insbesondere außerhalb des UKW-Bandes stören. In unmittelbarer Nachbarschaft des UKW-Hörfunkbereiches 87,5 bis 108 MHz liegen beispielsweise wichtige Flugnavigationsdienste, so der Landekursdienst (localizer) zwischen 108 und 112 MHz, das VHF-Drehfunkfeuer 108 - 117,975 MHz und der bewegliche Flugfunkdienst (VHF-Communications) zwischen 117,975 und 137 MHz. Eine Störung dieser benachbarten Flugnavigationsdienste könnte dadurch vermieden werden, daß zusätzliche Filtertöpfe am Ausgang der jeweiligen Sender angeordnet werden. Diese Lösung ist jedoch bei hoher Leistung von z.B. 10 kW sehr teuer und aufwendig.

Es ist Aufgabe der Erfindung, eine UKW-Hörfunk-Senderanlage zu schaffen, bei der mit einfachen Mitteln die Erzeugung solcher störender Mischfrequenzen vermieden ist.

Diese Aufgabe wird ausgehend von einer Senderanlage laut Oberbegriff des Hauptanspruches durch dessen kennzeichnende Merkmale gelöst. Vorteilhafte Weiterbildungen ergeben sich aus den Unteransprüchen.

Gemäß der Erfindung werden die teuren und voluminösen zusätzlichen Filtertöpfe (beispielsweise laut Seite 61 bis 67 der INFO Nr. 3-012D-2) vermieden, es sind je Sender jeweils nur wesentlich billigere und für die geringe Leistung des Steuerverstärkers ausgelegte Hochfrequenzweichen erforderlich, die zwischen Steuerverstärker und Leistungsverstärker angeordnet werden (beispielsweise Empfangsweichen laut Seite 68 der INFO Nr. 3-012D-2). Zusätzlich ist nur noch eine geeignete Auskoppeleinrichtung und eine Querverbindung zwischen den einzelnen Sendern nötig. Gemäß der Erfindung wird außerdem eine wesentlich wirkungsvollere Unterdrückung solcher störender Mischfrequenzen erzielt, da nicht nur eine zusätzliche Filterung am Ausgang des Senders vorgenommen wird, sondern eine völlige Auslöschung des störenden Signals am jeweiligen Ausgang des Senders, so daß solche Mischprodukte überhaupt nicht mehr entstehen können. Die erfindungsgemäße Maßnahme ist also nicht nur einfacher und billiger, sondern auch wirkungsvoller. Die erfindungsgemäße Kompensationsmaßnahme ist nicht nur für aus zwei Sendern unterschiedlicher Frequenz bestehende Hörfunksenderanlagen geeignet, sondern auch für Anlagen, die aus drei, vier oder noch mehr entkoppelt zusammen an eine Antenne angeschalteten Sendern unterschiedlicher Frequenz bestehen, bei drei Sendern müssen lediglich je Sender - falls alle Sender störende Mischprodukte erzeugen - jeweils zwei Weichen zwischen Steuerverstärker und Leistungsverstärker angeordnet werden und jeweils Querverbindungen mit den anderen beiden Sendern vorgenommen werden. Für vier oder mehr Sender gilt entsprechendes.

Die Erfindung wird im folgenden anhand einer schematischen Zeichnung an einem Ausführungsbeispiel näher erläutert.

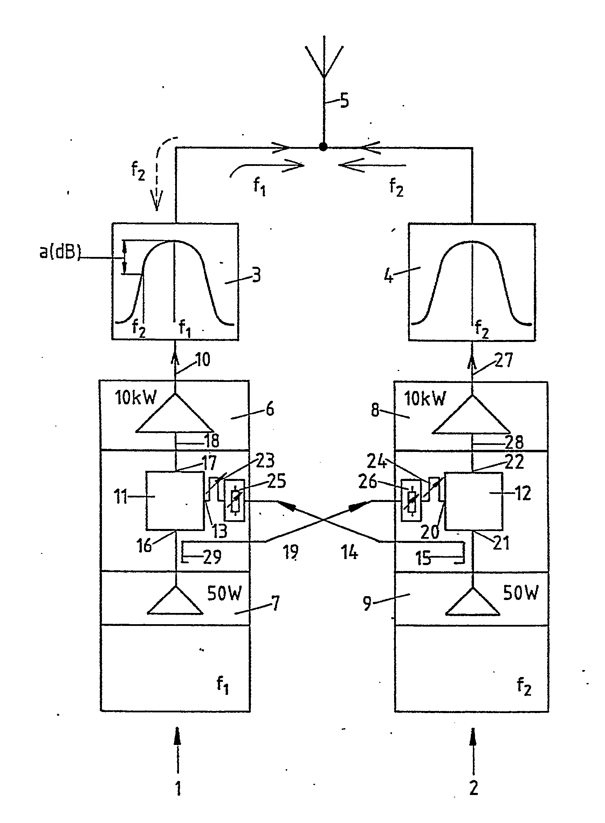

Die Figur zeigt das Prinzipschaltbild einer UKW-Hörfunk-Senderanlage bestehend aus zwei Sendern 1 und 2, die über eine Sternpunkt-Weiche (beispielsweise nach Seite 62 der INFO Nr. 3-012D-2) bestehend aus zwei Filtern 3 und 4 voneinander entkoppelt mit einer gemeinsamen Senderantenne 5 verbunden sind. Der Sender 1 arbeitet im UKW-Bereich 87,5 bis 108 MHz auf der Frequenz f1, der Sender 2 auf einer anderen Sendefrequenz f2. Das Filter 3 ist auf die Sendefrequenz f1 abgestimmt, das Filter 4 auf die Sendefrequenz f2. Der Sender 1 besteht aus einem röhrenbestückten Leistungsverstärker 6 von beispielsweise 10 kW Ausgangsleistung, der über einen Steuerverstärker 7 von beispielsweise 50 W Ausgangsleistung angesteuert ist. Der Sender 2 besteht in gleicher Weise aus einem 10 kW Leistungsverstärker 8 und einem 50 W-Steuerverstärker 9. Die beiden Leistungsverstärker 6 und 8 sind beispielsweise röhrenbestückte Senderendstufen gemäß Seiten 30 und 31 der INFO Nr. 3-012D-2 der Firma Rohde & Schwarz, sie könnten jedoch auch transistorbestückte Senderendstufen sein. Die Steuersender 7 und 9 sind beispielsweise laut Seite 14 und 15 der erwähnten Rohde & Schwarz-INFO-Druckschrift aufgebaut. Wenn die Sendefrequenz f2 relativ nahe an der Sendefrequenz f1 liegt, so wird ein Teil der Ausgangsleistung des Senders 2 von der Antenne 5 rückwärts dem Eingang des Filters 3 zugeführt, das auf die Mittenfrequenz f1 abgestimmt ist. f2 liegt noch auf der Flanke des Filters 3 und kann damit beispielsweise mit 30 dB gedämpft durch das Filter 3 hindurch zum Ausgang 10 des Senders 1 gelangen und sich damit im Leistungsverstärker 6 mit der dort verstärkten Sendefrequenz f1 mischen, es entstehen also in diesem Fall innerhalb des Leistungsverstärkers 6 die Störfrequenzen 2f1 - f2 und 2f2 - f1, die möglicherweise im frequenzmäßig benachbarten Frequenzbereich der Flugnavigationsdienste liegen und dort stören könnten oder die innerhalb des eigentlichen UKW-Bandes stören.

Um dies zu vermeiden ist jeweils zwischen Leistungsverstärker 6 bzw. 8 und Steuerverstärker 7 bzw. 9 jedes Senders 1,2 eine zusätzliche Hochfrequenzweiche 11 bzw. 12 angeordnet, beispielsweise eine Sternpunkt- oder Richtkopplerweiche nach Seite 68 der INFO Nr. 3-012D-2, die nur für die geringe Ausgangsleistung von beispielsweise 50 W des Steuerverstärkers 7 bzw. 9 ausgelegt sein muß und daher klein und billig realisiert werden kann. Dem Schmalbandeingang 13 der Weiche 11 des Senders 1 wird über eine Verbindungsleitung 14 ein Teil der Ausgangsleistung des Steuerverstärkers 9 des Senders 2 zugeführt, hierzu ist beispielsweise am Ausgang des Steuerverstärkers 9 ein Richtkoppler 15, ein entsprechender Spannungsteiler oder gegebenenfalls nur ein Auskoppelkondensator vorgesehen. Dem Breitbandeingang 16 der Weiche 11 wird die Steuerleistung des Steuerverstärkers 7 zugeführt, der Ausgang 17 der Weiche ist mit dem Eingang 18 des Leistungsverstärkers 6 verbunden. In gleicher Weise wird die über einen Koppler 29 ausgekoppelte Teilleistung des Steuerverstärkers 7 des Senders 1 über eine Querverbindung 19 dem Schmalbandeingang 20 der Weiche 12 zugeführt, der über ihren Breitbandeingang 21 die Steuerleistung des Steuerverstärkers 9 zugeführt ist und deren Ausgang 22 wieder mit dem Eingang 28 des Leistungsverstärkers 8 verbunden ist. In den Querverbindungen 14 bzw. 19 sind jeweils Phasenschieber 23 bzw. 24 sowie Dämpfungsglieder 25 und 26 angeordnet, mit denen die ausgekoppelte Teilleistung in der Amplitude und in der Phase einstellbar ist. Das einstellbare Dämpfungsglied 25 und der einstellbare Phasenschieber 23 der Querverbindung 14 wird so eingestellt, daß die dem Schmalbandeingang 13 zugeführte Kompensationsleistung der Frequenz f2 so groß ist und eine solche Phase besitzt, daß das am Ausgang 10 des Verstärkers 1 auftretende Störsignal der Frequenz f2 innerhalb des Leistungsverstärkers 6 kompensiert, also ausgelöscht wird und daher zusammen mit der Frequenz f1 des Senders 1 nicht mehr die störenden Mischsignale erzeugen kann. In gleicher Weise wird am Ausgang 27 des Verstärkers 2 das dort möglicherweise über das Filter 4 eingekoppelte Störsignal der Frequenz f1 des Senders 1 kompensiert, indem der Phasenschieber 24 bzw. das Dämpfungsglied 26 der Querverbindung 19 entsprechend eingestellt werden. Natürlich ist diese Kompensationsmaßnahme nur bei denjenigen Sendern nötig, bei denen hervorgerufen durch die jeweilige Frequenzlage die erwähnte Störung zu befürchten ist. Am Ausgang 10 des Senders 1 wäre ohne erfindungsgemäßer Kompensationsmaßnahme beispielsweise eine Störfrequenz von 2f1 - f2 und 2f2 - f1 zu befürchten, gleiches gilt für den Ausgang 27 des Senders 2. Nachdem diese Mischprodukte jedoch unterschiedlich groß sind, kann es sein, daß nur das im Sender 1 erzeugte Mischprodukt die eine Störung bewirkende Größe erreicht, das gleiche Mischprodukt beim Sender 2 jedoch unterhalb der zu tolerierenden Leistung liegt. In diesem Fall ist natürlich nur im Sender 1 die erfindungsgemäße Kompensationsmaßnahme erforderlich, die Weiche 12 im Sender 2 könnte entfallen. Gleiches gilt für Senderanlagen mit drei oder mehr Sendern. Wenn bei drei Sendern beispielsweise nur die Frequenzen f1 und f2 nahe beieinander liegen während die Frequenz f3 weiter ab liegt, ist nur eine Störung des Mischproduktes aus den Frequenzen f1 und f2 zu befürchten und es sind daher wieder nur bei den Sendern 1 und 2 entsprechende Kompensationsmaßnahmen nötig, nicht jedoch bei dem dritten Sender. Wenn allerdings bei allen drei Sendern einer Senderanlage eine Kompensation nötig wird, müssen je Sender zwischen Steuerverstärker und Leistungsverstärker jeweils zwei Weichen angeordnet werden, da in diesem Fall ja von zwei benachbarten Sendern jeweils ein Teil der Ausgangsleistung im kompensierenden Sinne eingekoppelt werden muß. Für vier oder noch mehr Sender sind entsprechend mehr zusätzliche Weichen und Querverbindungen nötig.

## Patentansprüche

1. UKW-Hörfunk-Senderanlage mit mindestens zwei über eine Senderweiche mit einer gemeinsamen Antenne (5) verbundenen Sendern (1, 2) unterschiedlicher Sendefrequenz jeweils bestehend aus einem Leistungsverstärker (6, 8) hoher Ausgangsleistung und einem mit dessen Steuereingang verbundenen Steuerverstärker (7, 9) kleinerer Ausgangsleistung, dadurch **gekennzeichnet,** daß dem Eingang (18) des Leistungsverstärkers (6) eines ersten Senders (1) ein Teil der Ausgangsleistung des Steuerverstärkers (9) mindestens eines zweiten Senders (2) mit einer solchen Leistung und Phase zugeführt ist, daß die am Ausgang (10) des Leistungsverstärkers (6) des ersten Senders (1) eingekoppelte Störleistung des zweiten Senders (2) kompensiert wird.

2. Senderanlage nach Anspruch 1, dadurch **gekennzeichnet,** daß zwischen dem Ausgang des Steuerverstärkers (7,9) und dem Steuereingang (18,28) des Leistungsverstärkers (6,8) mindestens eines Senders (1,2) mindestens eine Weiche (11,12) angeordnet ist, über welche ein mittels Kopplers (15,29) ausgekoppelter Teil der Ausgangsleistung des Steuerverstärkers (9,7) eines anderen Senders (2) dem Eingang (18,28) des Leistungsverstärkers (6,8) zuführbar ist.

3. Senderanlage nach Anspruch 1 oder 2, dadurch **gekennzeichnet,** daß in der Verbindungsleitung (14,19) zwischen der jeweiligen Weiche (11,12) des einen Senders und dem Koppler (15,29) des anderen Senders jeweils einstellbare Dämpfungs- und/oder Phasendrehglieder (23 bis 26) angeordnet sind.

## Claims

1. VHF radio transmitting station having at least two transmitters (1, 2) of different transmit frequencies connected via a separating filter to a common antenna (5), each transmitter comprising a power amplifier (6, 8) with a high power output and a control amplifier (7, 9) with a smaller power output connected to the control input of said power amplifier, characterised in that part of the power output from the control amplifier (9) of at least one second transmitter (2) is passed to the input (18) of the power amplifier (6) of a first transmitter (1), with a power and phase such that the interference power from the second transmitter (2) injected at the output (10) of the power amplifier (6) of the first transmitter (1) is compensated.

2. Transmitting station according to claim 1, characterised in that between the output of the control amplifier (7, 9) and the control input (18, 28) of the power amplifier (6, 8) of at least one transmitter (1, 2) there is disposed at least one separating filter (11, 12), via which a portion of the output power from the control amplifier (9, 7) of another transmitter (2), said portion having been decoupled by means of a coupler (15, 29), can be sent to the input (18, 28) of the power amplifier (6, 8).

3. Transmitting station according to claim 1 or 2, characterised in that respective adjustable attenuators and/or phase shifters (23 to 26) are disposed in the connecting cable (14, 19) between the respective separating filter (11, 12) of one transmitter and the coupler (15, 29) of the other transmitter.

**Revendications**

1. Installation de transmission radio THF comportant au moins deux émetteurs (1, 2) reliés à une antenne commune (5) par un aiguillage d'émetteur, les émetteurs travaillant à une fréquence d'émission différente et se composant chaque fois d'un amplificateur de puissance (6, 8) fournissant une puissance de sortie importante et d'un amplificateur de commande (7, 9) relié à l'entrée de commande de l'amplificateur de puissance et ayant une puissance de sortie plus faible, installation caractérisée en ce que l'entrée (18) de l'amplificateur de puissance (6) d'un premier émetteur (1) reçoit une partie de la puissance de sortie de l'amplificateur de commande (8) d'au moins un second émetteur (2) avec une puissance d'une phase permettant de compenser la puissance parasite du second émetteur (2) couplé à la sortie (10) de l'amplificateur de puissance (6) du premier émetteur (1).

2. Installation de transmission selon la revendication 1, caractérisée en ce qu'entre la sortie de l'amplificateur de commande (7, 9) et l'entrée de commande (18, 28) de l'amplificateur de puissance (6, 8) d'au moins un émetteur (1, 2), il est prévu au moins un aiguillage (11, 12) par lequel une partie découplée de la puissance de sortie de l'amplificateur de commande (9, 7) d'un autre émetteur (2) est couplée par un coupleur (15, 29) à l'entrée (18, 28) de l'amplificateur de puissance (6, 8).

3. Installation de transmission selon la revendication 1 ou 2, caractérisée en ce que dans la ligne de liaison (14, 19) entre les aiguillages respectifs (11, 12) d'un émetteur et le coupleur (15, 19) de l'autre émetteur, on a prévu chaque fois des organes d'atténuation et/ou de déphasage réglables (23-26).